# EUROPEAN PATENT APPLICATION

(11) **EP 4 847 183 A1**
(43) Date of publication of application: **02.12.2026**
(21) Application number: 26179431.7
(22) Date of filing: 19.05.2026
(51) Int. Cl.: B23K 26/16, B23K 26/12, B08B 15/02, B08B 15/04

(54) **DUST REMOVAL DEVICE FOR LASER WELDING AND LASER WELDING EQUIPMENT**

(30) Priority: 23.05.2025 CN 202521029036 U
(71) Applicant: Trumpf (China) Co., Ltd., Taicang, Jiangsu 215400 (CN)
(72) Inventor: HOU, Zekai, Jiangsu, 215400 (CN); WANG, Weiyu, Jiangsu, 215400 (CN); ZHAO, Peng, Jiangsu, 215400 (CN); LU, Jianfeng, Jiangsu, 215400 (CN); LIU, Yuan, Jiangsu, 215400 (CN)
(74) Representative: Kohler Schmid Möbus Patentanwälte

(57) **Abstract**

The present utility model proposes a dust removal device for laser welding, which comprises: a dust removal hood having a substantially cylindrical hood main body (11), a welding module connecting cylinder (12), and a plurality of dust removal pipe connecting cylinders (13), wherein the hood main body (11) delimits a dust removal cavity and has a dust removal port opening toward a workpiece to be welded, and the welding module connecting cylinder (12) and the plurality of dust removal pipe connecting cylinders (13) are integrally formed with the hood main body (11) and communicate with the dust removal cavity, wherein the hood main body (11) has a circumferentially continuous hood peripheral wall (110), and wherein a hollow coolant flow channel (111) is formed inside a wall body of the hood peripheral wall (110). According to some embodiments of the present utility model, the integrally formed dust removal hood is conducive to ensuring the sealing performance of the dust removal device, and thus ensuring that spatters and smoke dust generated during the welding process can be fully absorbed; furthermore, the addition of the coolant flow channel (111) to form a liquid cooling structure can prevent the dust removal device from being damaged due to overheating during the laser welding process. The present utility model further proposes a corresponding laser welding equipment.

## Description

### TECHNICAL FIELD

The present utility model relates to the technical field of laser welding, and in particular relates to a dust removal device for laser welding having an integrated lightweight structure as well as cooling and sealing functions, and a corresponding laser welding equipment.

### BACKGROUND ART

Traditional coaxial dust removal devices for laser welding are generally assembled from a plurality of modules, and each module is mostly manufactured using traditional machining methods, so that the sealing performance of the assembly is difficult to guarantee. Moreover, the process limitations of traditional machining result in the inner wall of the dust removal channel containing a large number of sharp corners, grooves, and steps, which are prone to accumulating dust during the production process and form gas turbulence during the dust removal process, affecting the stability of the shielding gas. In addition, the objects of traditional machining are mostly solid structural components, which increases the overall weight of the dust removal device, thereby increasing the operating load of the welding module. Furthermore, the heat generated during the laser welding process also easily causes damage to the dust removal device. Therefore, there is still a need for a further improved dust removal device for laser welding at present.

### SUMMARY OF THE UTILITY MODEL

An object of the present utility model is to provide a dust removal device for laser welding and a laser welding equipment using the dust removal device, so as to at least partially solve the problems existing in the prior art.

According to a first aspect of the present utility model, there is provided a dust removal device for laser welding, comprising:
a dust removal hood having a substantially cylindrical hood main body, a welding module connecting cylinder, and a plurality of dust removal pipe connecting cylinders, wherein the hood main body delimits a dust removal cavity and has a dust removal port opening toward a workpiece to be welded, and the welding module connecting cylinder and the plurality of dust removal pipe connecting cylinders are integrally formed with the hood main body and communicate with the dust removal cavity,
wherein the hood main body has a circumferentially continuous hood peripheral wall, and a hollow coolant flow channel is formed inside a wall body of the hood peripheral wall.

According to the dust removal device for laser welding in the first aspect of the present utility model, the integrally formed dust removal hood is conducive to ensuring the sealing performance of the dust removal device, and thus ensuring that spatters and smoke dust generated during the welding process can be fully absorbed; furthermore, the addition of the coolant flow channel to form a liquid cooling structure can prevent the dust removal device from being damaged due to overheating during the laser welding process.

According to an optional embodiment of the present utility model, the coolant flow channel is formed as a spiral coolant flow channel continuously wound circumferentially inside the wall body of the hood peripheral wall. Through this embodiment, the hood main body of the dust removal hood can be cooled with a simple cooling structure.

According to an optional embodiment of the present utility model, one of a flow channel inlet and a flow channel outlet of the coolant flow channel is disposed adjacent to one end of the hood peripheral wall in an axial direction, and the other is disposed adjacent to the other end of the hood peripheral wall in the axial direction. Through this embodiment, the coolant flow channel can pass through a larger region of the hood peripheral wall to obtain a larger cooling area, thereby arriving at a better cooling effect.

According to an optional embodiment of the present utility model, the flow channel inlet and the flow channel outlet of the coolant flow channel are arranged along the axial direction of the hood peripheral wall. Through this embodiment, since the flow channel inlet and the flow channel outlet of the coolant flow channel are arranged along the axial direction of the hood peripheral wall, i.e., arranged on the same generatrix of the hood peripheral wall and thus on the same side of the hood peripheral wall, it is convenient to connect a coolant pipe for supply and circulation of the coolant.

According to an optional embodiment of the present utility model, the dust removal device further comprises a sealing brush disposed circumferentially continuously at an end edge of the hood peripheral wall on a side of the dust removal port and extending toward the workpiece to be welded. Through this embodiment, during a laser welding process, by causing the sealing brush at the end edge of the dust removal hood on the side of the dust removal port to fully contact the workpiece to be welded, the gap between the dust removal hood and the workpiece to be welded can be eliminated, leakage of spatters and smoke dust can be avoided, and the dust removal effect can be further improved.

According to an optional embodiment of the present utility model, the sealing brush is detachably mounted at the end edge of the hood peripheral wall. Through this embodiment, the sealing brush can be used or replaced according to actual situations, ensuring the sealing effect and improving the applicability of the dust removal device to different processing conditions.

According to an optional embodiment of the present utility model, the hood main body is formed in the shape of a trapezoidal cylinder, the lower bottom surface of which is formed as an opening to serve as the dust removal port and which communicates, at its upper bottom surface, with the welding module connecting cylinder and the plurality of dust removal pipe connecting cylinders. Through this embodiment, the hood main body in the shape of a trapezoidal cylinder having an open lower bottom surface helps to enable the dust removal device to have a sufficiently large coverage area, so as to ensure that the spatters and smoke dust generated by welding can be fully absorbed into the hood main body.

According to an optional embodiment of the present utility model, the welding module connecting cylinder is configured to be connected to a laser welding module and coaxial with a laser beam emitted by the laser welding module. Through this embodiment, it is easy to fix the laser welding module and perform laser welding.

According to an optional embodiment of the present utility model, an inner wall of the dust removal pipe connecting cylinder is smoothly and continuously connected to an inner wall of the hood main body. Through this embodiment, the accumulation of smoke dust and the like inside the hood main body can be reduced, and the dust removal efficiency can be improved.

According to an optional embodiment of the present utility model, the dust removal hood is integrally formed using 3D printing technology. Through this embodiment, inner wall sharp corners, grooves, steps and the like generated during traditional machining and assembly processes can be avoided as much as possible, and the smoke dust accumulated inside the dust removal device during the production process can be reduced; furthermore, changes can be carried out flexibly according to actual working conditions, which facilitates installation and commissioning, avoids interference, and provides space for upgrading and modifying the dust removal device.

According to an optional embodiment of the present utility model, the dust removal device comprises four dust removal pipe connecting cylinders.

According to an optional embodiment of the present utility model, the welding module connecting cylinder is located at the center of the upper bottom surface of the hood main body, and the plurality of dust removal pipe connecting cylinders are arranged around the welding module connecting cylinder.

According to an optional embodiment of the present utility model, the welding module connecting cylinder comprises a protruding portion protruding out of the hood main body and an extending-in portion extending into the dust removal cavity. Through this embodiment, by means of the welding module connecting cylinder having a certain extension dimension and having the protruding portion as well as the extending-in portion, it is beneficial to fix the laser welding module and ensure the coaxiality of the dust removal device and the laser welding module, which is conductive to the execution of the laser welding operation.

According to an optional embodiment of the present utility model, a tail end face of a cylinder wall of the protruding portion is formed with a connecting structure for connecting to the laser welding module. Through this embodiment, the direct or indirect connection between the welding module connecting cylinder and the laser welding module can be achieved by means of the connecting structure.

According to an optional embodiment of the present utility model, a cylinder wall of the extending-in portion is formed with a hollow cavity, and a plurality of hollow channels communicating with the hollow cavity are formed in the cylinder wall of the protruding portion, the hollow channels being arranged at equal intervals in a circumferential direction and opening on the tail end face of the cylinder wall of the protruding portion. Through this embodiment, the hollow cavity and the hollow channels can reduce the overall weight of the dust removal device, reduce the operating load of the welding mechanism, and improve the acceleration/deceleration capability and positioning accuracy of the welding mechanism. Furthermore, processing powder generated when processing the hollow cavity and the hollow channels can be discharged through openings of the hollow channels on the tail end face of the cylinder wall of the protruding portion.

According to an optional embodiment of the present utility model, a tail end face of the cylinder wall of the extending-in portion is formed as an inclined surface that is inclined toward a central axis of the welding module connecting cylinder as going away from the protruding portion. Through this embodiment, the air flow can be facilitated, the accumulation of smoke dust and the like inside the hood main body can be reduced, and further the dust removal efficiency can be improved.

According to an optional embodiment of the present utility model, a plurality of reinforcing ribs supporting the welding module connecting cylinder are integrally formed in the dust removal cavity, the plurality of reinforcing ribs being arranged at equal intervals in the circumferential direction. Through this embodiment, the strength of the dust removal hood can be increased, and damage to the dust removal device itself and the laser welding module can be avoided.

According to an optional embodiment of the present utility model, the dust removal device at least further comprises: a connecting assembly, which is configured to lock and connect the welding module connecting cylinder to the laser welding module; and a plurality of dust removal pipes, which are sealingly connected to the plurality of dust removal pipe connecting cylinders, respectively.

According to a second aspect of the present utility model, there is provided a laser welding equipment, which at least comprises the dust removal device for laser welding according to the first aspect of the present utility model.

### BRIEF DESCRIPTION OF THE DRAWINGS

Hereinafter, the principles, characteristics, and advantages of the present utility model can be better understood by describing the present utility model in more detail with reference to the accompanying drawings. The drawings include:
FIG. 1 schematically shows a perspective view of main parts of a dust removal device for laser welding according to an exemplary embodiment of the present utility model;
FIG. 2 schematically shows a perspective view of a dust removal hood of the dust removal device for laser welding according to an exemplary embodiment of the present utility model;
FIG. 3 schematically shows a perspective view of a dust removal hood of a dust removal device for laser welding according to an exemplary embodiment of the present utility model from another angle, wherein a coolant flow channel inside a hood peripheral wall of a hood main body is exemplarily shown by dashed lines;
FIG. 4 schematically shows a longitudinal cross-sectional view of a dust removal hood of a dust removal device for laser welding according to an exemplary embodiment of the present utility model;
FIG. 5 schematically shows a perspective view of a dust removal hood of a dust removal device for laser welding according to an exemplary embodiment of the present utility model as viewed from the bottom;
FIG. 6 schematically shows a bottom view of a dust removal hood of a dust removal device for laser welding according to an exemplary embodiment of the present utility model; and
FIG. 7 schematically shows a perspective view of a dust removal device for laser welding according to an exemplary embodiment of the present utility model in an assembled state with a laser welding module.

### DETAILED DESCRIPTION OF EMBODIMENTS

To make the technical problems to be solved, technical solutions, and beneficial technical effects of the present utility model clearer, the present utility model will be further described in detail below in conjunction with the accompanying drawings and a plurality of exemplary embodiments. It should be understood that the specific embodiments described herein are only used to explain the present utility model and are not intended to limit the scope of protection of the present utility model.

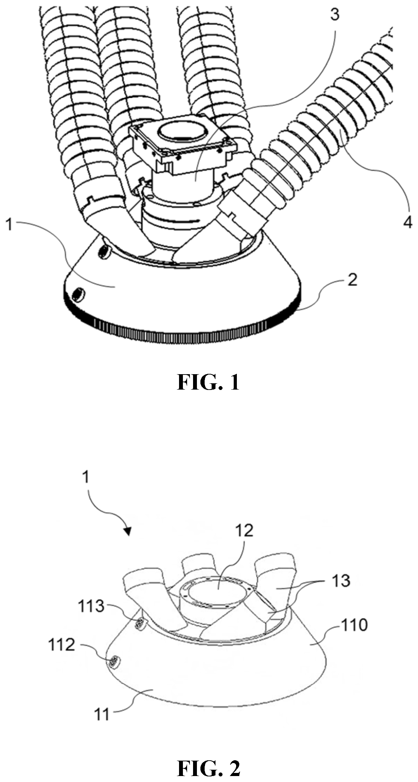

FIG. 1 schematically shows a perspective view of main parts of a dust removal device for laser welding according to an exemplary embodiment of the present utility model. As shown in FIG. 1, the dust removal device for laser welding according to an exemplary embodiment of the present utility model mainly comprises a dust removal hood 1, a sealing brush 2 mounted on the dust removal hood 1, a connecting assembly 3 fixedly connected to the dust removal hood 1, and a plurality of dust removal pipes 4.

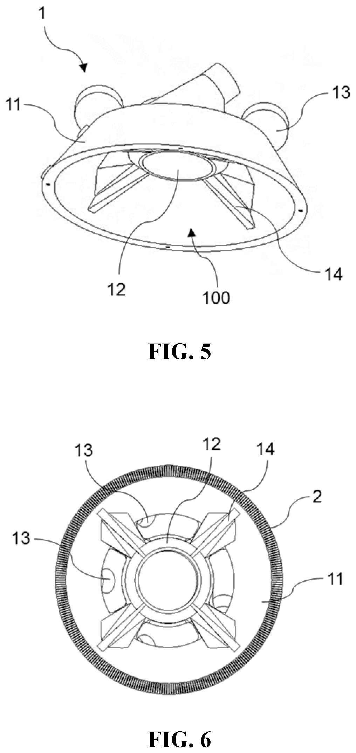

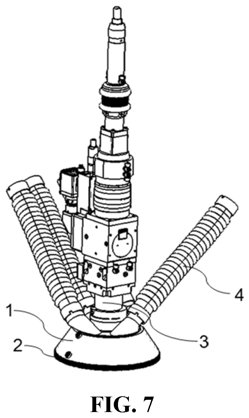

FIGS. 2 to 6 show the dust removal hood 1 in different views. As shown in FIGS. 2 to 6, the dust removal hood 1 has a substantially cylindrical hood main body 11, a welding module connecting cylinder 12, and a plurality of dust removal pipe connecting cylinders 13. The hood main body 11 delimits a dust removal cavity 100 and has a dust removal port opening toward a workpiece to be welded. The welding module connecting cylinder 12 and the plurality of dust removal pipe connecting cylinders 13 are integrally formed with the hood main body 11 and communicate with the dust removal cavity 100, wherein the welding module connecting cylinder 12 is used for fixed connection with the connecting assembly 3, so as to be locked and connected with a laser welding module of a laser welding equipment by means of the connecting assembly 3, as shown in FIG. 7. Moreover, the plurality of dust removal pipe connecting cylinders 13 are used to be sealingly connected to the plurality of dust removal pipes 4, respectively, so as to extract spatters and smoke dust generated during the welding process from the dust removal cavity 100 through the dust removal pipes 4.

The hood main body 11 has a circumferentially continuous hood peripheral wall 110, and according to a preferred exemplary embodiment of the present utility model, a hollow coolant flow channel 111 is formed inside a wall body of the hood peripheral wall 110.

According to a preferred embodiment, the coolant flow channel 111 is formed as a spiral coolant flow channel continuously wound circumferentially inside the wall body of the hood peripheral wall 110. Of course, depending on actual needs, the coolant flow channel may also be designed and manufactured to pass through at least a partial region or the entire region of the hood peripheral wall 110 in other shapes, for example, a labyrinth shape.

According to a preferred embodiment, one of a flow channel inlet 112 and a flow channel outlet 113 of the coolant flow channel 111 is disposed adjacent to one end of the hood peripheral wall 110 in an axial direction and the other is disposed adjacent to the other end of the hood peripheral wall 110 in the axial direction. This enables the hood peripheral wall 110 to be cooled at least partially along the axial direction from one end to the other end.

According to a preferred embodiment, the flow channel inlet 112 and the flow channel outlet 113 of the coolant flow channel are aligned along the axial direction of the hood peripheral wall, which facilitates the connection of a coolant pipe for supply and circulation of the coolant.

According to a preferred embodiment, the sealing brush 2 is located circumferentially continuously at an end edge of the hood peripheral wall on a side of the dust removal port and extends toward the workpiece to be welded, thereby fully contacting the workpiece to be welded during the welding process, eliminating a gap between the dust removal hood 1 and the workpiece to be welded, further improving the dust removal effect, and avoiding leakage of spatters and smoke dust.

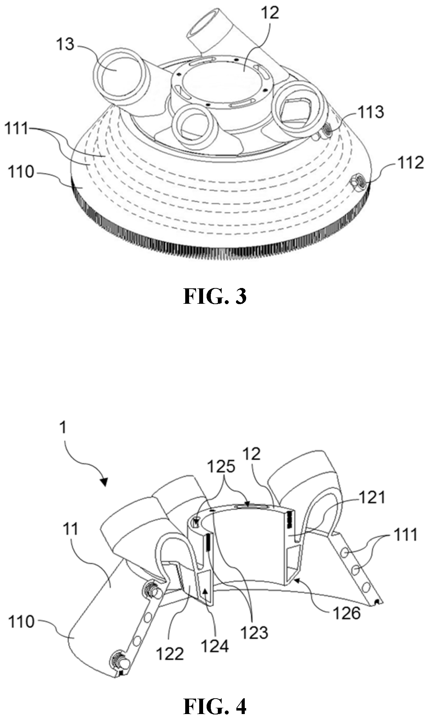

According to a preferred embodiment, the sealing brush 2 is detachably mounted at the end edge of the hood peripheral wall 11. For example, as shown in FIG. 4, an engaging groove (not designated with a reference sign) may be provided on the end edge of the hood peripheral wall 110, and, for example, a mounting edge of the sealing brush 2 can be engaged in the engaging groove and can be detached therefrom, so that the sealing brush 2 can be detached when the sealing brush 2 is not needed or needs to be replaced due to damage, and a suitable new sealing brush 2 can be mounted as needed.

According to a preferred embodiment, the hood main body 11 is formed in the shape of a trapezoidal cylinder, its larger lower bottom surface is formed as an opening to serve as the dust removal port, and it communicates, at a smaller upper bottom surface, with the welding module connecting cylinder 12 and the plurality of dust removal pipe connecting cylinders 13. Such a trapezoidal cylindrical configuration of the hood main body 11 enables the dust removal hood 1 to cover a larger area, ensuring that spatters and smoke dust generated by welding can be fully absorbed.

According to a preferred embodiment, the welding module connecting cylinder 12 is configured to be connected to the laser welding module and coaxial with the laser beam emitted by the laser welding module.

According to a preferred embodiment, an inner wall of the dust removal pipe connecting cylinder 13 is smoothly and continuously connected to an inner wall of the hood main body 11.

According to a preferred embodiment, the dust removal hood 1 is integrally formed using 3D printing technology. In this way, the structure of the dust removal hood 1 and even the entire dust removal device can be flexibly designed and changed according to actual working conditions, such as the orientation of the dust removal pipe connecting cylinders 13, and the course or arrangement of the coolant flow channel 111 in the wall body of the hood peripheral wall 110, etc., which facilitates installation and commissioning, avoids interference, and provides space for upgrading and modifying.

According to a preferred embodiment, the dust removal device comprises four dust removal pipe connecting cylinders 13.

According to a preferred embodiment, the welding module connecting cylinder 12 is located at the center of the upper bottom surface of the hood main body 11, and the plurality of dust removal pipe connecting cylinders 13 are arranged around the welding module connecting cylinder 12.

According to a preferred embodiment, the welding module connecting cylinder 12 is formed to extend into the dust removal cavity 100 and protrude out of the hood main body 11. That is, as shown in FIG. 4, the welding module connecting cylinder 12 comprises a protruding portion 121 protruding out of the hood main body 11 and an extending-in portion 122 extending into the dust removal cavity 100. Through such a configuration of the welding module connecting cylinder 12 having a certain extending dimension, a connection between the dust removal hood 1 and the laser welding module can be more stable and firmer, and in particular, a welding head can be firmer, which is beneficial to the laser welding operation.

According to a preferred embodiment, a tail end face of a cylinder wall of the protruding portion 121 is formed with a connecting structure 123 for connecting to the laser welding module. As shown in FIG. 4, the connecting structure 123 may be, for example, a plurality of threaded holes arranged at equal intervals in a circumferential direction.

According to a preferred embodiment, a cylinder wall of the extending-in portion 122 of the welding module connecting cylinder 12 is formed with a hollow cavity 124, and a plurality of hollow channels 125 communicating with the hollow cavity 124 are formed in the cylinder wall of the protruding portion 121, the hollow channels 125 being arranged at equal intervals in the circumferential direction and opening on the tail end face of the cylinder wall of the protruding portion 121. Through such a configuration, the overall weight of the dust removal device can be further reduced, and processing powder of a hollow structure can be discharged.

According to a preferred embodiment, a tail end face of the cylinder wall of the extending-in portion 122 is formed as an inclined surface 126 that is inclined toward a central axis of the welding module connecting cylinder 12 as going away from the protruding portion 121. The inclined surface 126 is beneficial for air flow, reduces the accumulation of smoke dust and the like inside the hood main body 11, and further improves the dust removal efficiency.

According to a preferred embodiment, a plurality of reinforcing ribs 14 supporting the welding module connecting cylinder 12 are integrally formed in the dust removal cavity 100, the plurality of reinforcing ribs 14 being arranged at equal intervals in the circumferential direction.

Although specific embodiments of the present utility model have been described in detail herein, they are provided for illustrative purposes only and should not be considered as limiting the scope of the present utility model. Various substitutions, changes and modifications can be conceived without departing from the spirit and scope of the present utility model.

### List of Reference Signs

- 1: Dust removal hood
- 11: Hood main body
- 110: Dust removal cavity
- 111: Coolant flow channel
- 12: Welding module connecting cylinder
- 121: Protruding portion
- 122: Extending-in portion
- 123: Connecting structure
- 124: Hollow cavity
- 125: Hollow channel
- 126: Inclined surface
- 13: Dust removal pipe connecting cylinder
- 14: Reinforcing rib
- 2: Sealing brush
- 3: Connecting assembly
- 4: Dust removal pipe

## Claims

1. A dust removal device for laser welding, **characterized in that**, the dust removal device comprises:
a dust removal hood (1) having a substantially cylindrical hood main body (11), a welding module connecting cylinder (12), and a plurality of dust removal pipe connecting cylinders (13), wherein the hood main body (11) delimits a dust removal cavity (100) and has a dust removal port opening toward a workpiece to be welded, and the welding module connecting cylinder (12) and the plurality of dust removal pipe connecting cylinders (13) are integrally formed with the hood main body (11) and communicate with the dust removal cavity (100),
wherein the hood main body (11) has a circumferentially continuous hood peripheral wall (110), and a hollow coolant flow channel (111) is formed inside a wall body of the hood peripheral wall (110).

2. The dust removal device for laser welding according to claim 1, **characterized in that**,
the coolant flow channel (111) is formed as a spiral coolant flow channel (111) continuously wound circumferentially inside the wall body of the hood peripheral wall (110).

3. The dust removal device for laser welding according to claim 2, **characterized in that**,
one of a flow channel inlet and a flow channel outlet of the coolant flow channel (111) is disposed adjacent to one end of the hood peripheral wall (110) in an axial direction, and the other is disposed adjacent to the other end of the hood peripheral wall (110) in the axial direction; and/or
the flow channel inlet and the flow channel outlet of the coolant flow channel (111) are arranged along the axial direction of the hood peripheral wall (110).

4. The dust removal device for laser welding according to any one of claims 1 to 3, **characterized in that**,
the dust removal device further comprises a sealing brush (2) disposed circumferentially continuously at an end edge of the hood peripheral wall (110) on a side of the dust removal port and extending toward the workpiece to be welded.

5. The dust removal device for laser welding according to claim 4, **characterized in that**,
the sealing brush (2) is detachably mounted at the end edge of the hood peripheral wall (110).

6. The dust removal device for laser welding according to any one of claims 1 to 3 and 5, **characterized in that**,
the hood main body (11) is formed in the shape of a trapezoidal cylinder, the lower bottom surface of which is formed as an opening to serve as the dust removal port and which communicates, at its upper bottom surface, with the welding module connecting cylinder (12) and the plurality of dust removal pipe connecting cylinders (13); and/or
the welding module connecting cylinder (12) is configured to be connected to a laser welding module and coaxial with a laser beam emitted by the laser welding module; and/or
an inner wall of the dust removal pipe connecting cylinder (13) is smoothly and continuously connected to an inner wall of the hood main body (11); and/or
the dust removal hood (1) is integrally formed using 3D printing technology.

7. The dust removal device for laser welding according to claim 6, **characterized in that**,
the dust removal device comprises four dust removal pipe connecting cylinders (13); and/or
the welding module connecting cylinder (12) is located at the center of the upper bottom surface of the hood main body (11), and the plurality of dust removal pipe connecting cylinders (13) are arranged around the welding module connecting cylinder (12); and/or
the welding module connecting cylinder (12) comprises a protruding portion (121) protruding out of the hood main body (11) and an extending-in portion (122) extending into the dust removal cavity (100).

8. The dust removal device for laser welding according to claim 7, **characterized in that**,
a tail end face of a cylinder wall of the protruding portion (121) is formed with a connecting structure (123) for connecting to the laser welding module; and/or
a cylinder wall of the extending-in portion (122) is formed with a hollow cavity (124), and a plurality of hollow channels (125) communicating with the hollow cavity (124) are formed in the cylinder wall of the protruding portion (121), the hollow channels (125) being arranged at equal intervals in a circumferential direction and opening on the tail end face of the cylinder wall of the protruding portion (121); and/or
a tail end face of the cylinder wall of the extending-in portion (122) is formed as an inclined surface (126) that is inclined toward a central axis of the welding module connecting cylinder (12) as going away from the protruding portion (121); and/or
a plurality of reinforcing ribs (14) supporting the welding module connecting cylinder (12) are integrally formed in the dust removal cavity (100), the plurality of reinforcing ribs (14) being arranged at equal intervals in the circumferential direction.

9. The dust removal device for laser welding according to any one of claims 1 to 3, 5, 7, and 8, **characterized in that**, the dust removal device at least further comprises:
a connecting assembly (3), wherein the connecting assembly (3) is configured to lock and connect the welding module connecting cylinder (12) to the laser welding module; and
a plurality of dust removal pipes (4), wherein the plurality of dust removal pipes (4) are sealingly connected to the plurality of dust removal pipe connecting cylinders (13), respectively.

10. A laser welding equipment, **characterized in that**, the laser welding equipment at least comprises a dust removal device for laser welding according to any one of claims 1 to 9.
